# FASCICULE DE BREVET EUROPEEN

(11) **EP 2 017 149 B1**
(45) Date de publication et mention de la délivrance du brevet: **17.02.2010**
(21) Numéro de dépôt: 08290693.4
(22) Date de dépôt: 15.07.2008
(51) Int. Cl.: B60T 8/17, B60T 13/74

(54) **Procédé de commande d'un frein de véhicule avec correction en couple**
Verfahren zur Steuerung einer Kraftfahrzeugbremse mit Drehmomentkorrektur
Method of controlling the brake of a vehicle with torque correction

(30) Priorité: 19.07.2007 FR 0705219
(43) Date de publication de la demande: 21.01.2009
(73) Titulaire: MESSIER-BUGATTI, 78140 Vélizy Villacoublay (FR)
(72) Inventeur: Thibault, Julien, 91120 Palaiseau (FR); Onfroy, Dominique, 92100 Boulogne Billancourt (FR)
(74) Mandataire: Parzy, Benjamin Alain

(56) Documents cités:
- EP-A- 1 695 887
- WO-A-2005/100113
- DE-A1- 19 536 694

## Description

L'invention concerne un procédé de commande d'un frein de véhicule avec correction en couple.

### ARRIERE-PLAN DE L'INVENTION

Les systèmes de freinage pour véhicule comportent des actionneurs de freinage (hydrauliques ou électromécaniques) pour appliquer aux roues du véhicule un couple de freinage tendant à ralentir le véhicule.

La plupart des commandes de frein connues en aéronautique utilisent une consigne, qui est traduite soit en une pression dans le cas des freins hydrauliques, soit en un effort à appliquer ou un déplacement du poussoir dans le cas de freins à actionneurs électromécaniques.

Des commandes utilisant une consigne de couple et organisant une boucle de rétroaction sur la base du couple mesuré ont été proposées, comme dans les documents US 2005/0001474 et DE 19536694. Ces commandes présentent l'avantage de prendre en compte globalement l'action du frein via le contrôle du couple qu'il génère, en permettant une adaptation aux dispersions de la réponse en couple du frein pour un effort de freinage donné.

Cependant, ces commandes à bande passante élevée peuvent interférer avec la protection anti-blocage des roues, notamment en cas de déphasage entre les commandes en couple et les commandes de l'anti-blocage. Dans certaines conditions d'adhérence, la commande en couple envoie une consigne de couple temporairement nulle pour éviter le blocage des roues. Mais si la roue se bloque intempestivement, le couple mesuré s'annule brutalement et le couple mesuré est alors égal à la consigne de couple nul. La roue reste ainsi bloquée, sans que le frein ne soit commandé pour relâcher la roue.

### OBJET DE L'INVENTION

L'invention a pour objet une commande de frein en utilisant une consigne d'effort ou de position, mais tenant néanmoins compte du couple mesuré.

### BREVE DESCRIPTION DE L'INVENTION

En vue de la réalisation de l'invention, on propose un procédé de commande d'un frein de véhicule adapté à exercer un effort de freinage en réponse à une consigne d'actionnement, dans lequel :
- à partir d'une consigne de freinage, on détermine une consigne nominale d'actionnement de l'actionneur du frein tenant compte de toutes les composantes de la consigne de freinage ;
- à partir de cette même consigne de freinage, et d'une mesure du couple développé par le frein, on détermine une correction de la consigne nominale d'actionnement, la correction ne tenant compte que des évolutions de basse fréquence de la consigne de freinage ;
- on applique la correction à la consigne nominale d'actionnement.

Ainsi, on contrôle bien le frein selon la consigne de freinage, et non en couple. La mesure du couple sert ici seulement à produire une correction à basse fréquence de la consigne nominale d'actionnement qui est elle calculée tenant compte des composantes haute fréquence de la consigne de freinage.

La correction basse fréquence ainsi proposée permet de réduire les dispersions en couple de freinage pour une consigne de freinage donnée, qui peuvent être causées par le dispersion de l'effort de freinage appliqué ou à une dispersion de la réponse en couple du frein à l'effort de freinage appliqué.

En outre, la correction basse fréquence ainsi proposée reste compatible avec une protection d'anti-blocage qui module à haute fréquence la consigne de freinage pour éviter le blocage de la roue.

Un des avantages de l'invention est de permettre un fonctionnement dégradé du frein en cas de perte du capteur de couple. La correction est alors arbitrairement annulée ou maintenue à sa valeur courante, et le frein est alors régulé uniquement en fonction de la consigne de freinage.

Dans le cas particulier d'une consigne de position, la correction en couple selon l'invention permet de compenser les dilatations thermiques qui peuvent faire varier l'effort appliqué par le frein.

### BREVE DESCRIPTION DES DESSINS

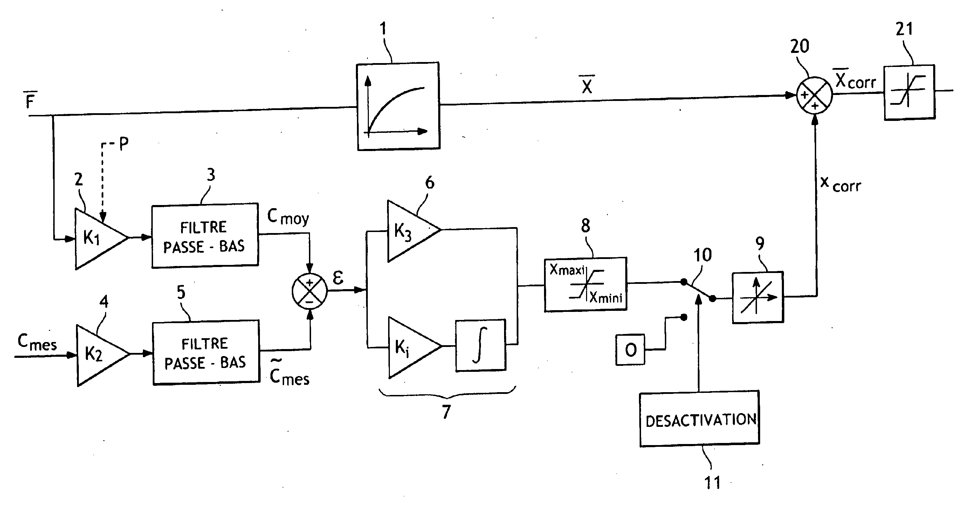

L'invention sera mieux comprise à la lumière de la description qui suit en référence à l'unique figure présente un schéma-bloc d'un mode particulier de mise en oeuvre du procédé de l'invention.

### DESCRIPTION DETAILLEE DE L'INVENTION

L'invention est ici décrite en application à un frein d'aéronef de type comportant des actionneurs électromécaniques commandés en déplacement. Un calculateur (non représenté) génère une consigne de freinage *F̅*. Cette consigne est corrigée à haute fréquence par un système de protection anti-blocage qui, vérifiant en permanence le taux de glissement de la roue, détecte un éventuel départ au blocage de la roue et diminue en conséquence la consigne de freinage *F̅* pour éviter le blocage de la roue.

De façon connue en soi, un convertisseur 1 transforme la consigne de freinage *X̅* en une consigne de position *F̅* pour le poussoir de l'actionneur, ici selon un modèle non-linéaire 1. Le calcul de la consigne de position *X̅* est ici réalisée à une fréquence de calcul élevée compatible avec la vitesse de fonctionnement de la protection d'anti-blocage, de sorte que la consigne de position *X̅* tient compte à la fois des composantes basse fréquence et des composantes haute fréquence de la consigne de freinage *F̅*.

Selon l'invention, on calcule une correction de position basse-fréquence *x_{corr}*, que l'on ajoute au moyen du sommateur 20 à la consigne de position *X̅* pour obtenir la consigne dé position corrigée *X̅_{corr}* = *X̅* + *x_{corr}.* Cette correction de position *x_{corr}* tient compte du couple mesuré selon les modalités suivantes.

On élabore tout d'abord une image d'un couple moyen *C_{moy}* correspondant à la consigne de freinage *F̅*. A cet effet, la consigne de freinage *F̅* est fournie à un étage proportionnel 2 de gain K1 pour la rendre comparable à un couple, puis est soumise à un premier filtre passe-bas 3 pour en éliminer toutes les composantes haute fréquence, et notamment celles qui sont dues à la mise en oeuvre de la protection d'anti-blocage.

Par ailleurs, on utilise une mesure du couple *Cₘₑₛ* réellement exercé par le frein qui est fournie à un étage proportionnel 4 de gain K2, puis est soumise à un deuxième filtre passe-bas 5 pour éliminer toutes les composantes haute fréquence ainsi que les bruits de mesure. On obtient un couple mesuré calibré *C̃ₘₑₛ.*

Le couple moyen *C_{moy}* et le couple mesuré calibré *C̃ₘₑₛ* sont fournis en entrée d'un comparateur qui génère une erreur ε. Cette erreur est soumise à un traitement, en étant fournie à un contrôleur comportant une action proportionnelle 6 de gain K3, une action intégrale 7, et enfin un étage de saturation 8 ayant pour but de restreindre la correction à des valeurs comprises dans l'intervalle [*x*ₘᵢₙ,*x*ₘₐₓ]. Cette saturation évite les corrections trop importantes qui perturberaient le bon fonctionnement du frein ou conduiraient à appliquer un effort trop élevé supérieur à un effort limite admissible pour le frein.

De préférence, et de façon connue en soi, l'action intégrale 7 comporte une protection d'anti-emballement qui fige l'action intégrale lorsque la correction est saturée par l'étage de saturation 8, de façon à éviter l'incrémentation de l'intégrale de l'erreur ε tant que la correction est saturée.

La sortie de l'étage de saturation 8 est alors fournie à un limiteur de pente 9, qui a pour fonction de garantir des variations progressives de la correction. On obtient ainsi la correction de position recherchée *x_{corr}*.

Lorsque l'aéronef est à l'arrêt, un effort de freinage peut être néanmoins appliqué, par exemple pour maintenir l'aéronef immobilisé au parking. L'effort ainsi appliqué conduirait à un couple moyen *C_{moy}* non nul, alors que le couple mesuré *Cₘₑₛ* est nul, ou très faible Dans une telle situation, l'erreur de couple serait grande et conduirait à une correction importante, augmentant encore le déplacement du poussoir des actionneurs, et contribuant ainsi à augmenter l'effort appliqué. Pour éviter une telle situation, on neutralise la correction. Pour effectuer cette neutralisation, on prévoit un commutateur 10 commandé par un organe de désactivation de la correction 11, qui permet de commuter l'entrée du limiteur de pente 9 à une valeur fixe, ici choisie égale à zéro. Cette commutation permet également de neutraliser la correction lorsqu'il est détecté que le capteur de couple fournissant la mesure de couple *Cₘₑₛ* est défaillant. Le limiteur de pente 9 disposé en aval du commutateur 10 permet d'éviter les à-coups de correction lors d'une telle commutation, et lors d'une commutation inverse.

L'invention n'est pas limitée à ce qui vient d'être décrit, mais bien au contraire englobe toute variante entrant dans le cadre défini par les revendications.

En particulier, bien que l'on ait illustré l'invention en relation avec des freins à actionneurs électromécaniques commandés en position, l'invention s'applique plus généralement à tout autre type de commande. On peut par exemple générer des consignes d'actionnement en effort pour des freins de ce même type, ou en pression pour des freins hydrauliques, ces consignes d'actionnement étant corrigées selon l'invention au moyen d'une mesure du couple généré par le frein.

Bien que l'on ait ici indiqué que la correction passait subitement à la valeur nulle lorsque la correction était neutralisée, on pourra prévoir d'autres désactivations de la correction, par exemple en maintenant la dernière valeur de correction avant la neutralisation, puis, lorsque la correction est réactivée, en repartant de ladite dernière valeur. On peut neutraliser la correction par d'autres moyens, par exemple en utilisant un sommateur 20 conditionnel qui arrête de sommer la correction de position *x_{corr}* à la consigne de position *X̅* en réponse à un ordre de neutralisation de la correction.

Bien que l'on ait indiqué que pour former une image du couple moyen *C_{moy}* à partir de la consigne de freinage *F̅*, on multipliait cette dernière par un gain K1 fixe, on pourra bien sûr utiliser un gain K1 variable qui est déterminé en temps réel en fonction de paramètres p tels que la vitesse de l'aéronef, la température du frein, ou le point de fonctionnement du frein, en utilisant un modèle numérique adéquat. Avantageusement, on pourra tenir compte non seulement de paramètres du frein qui est régulé, mais de paramètres provenant des autres freins, ce qui permet d'assurer une uniformisation de l'usure ou de l'échauffement des freins.

Bien que l'on ait utilisé ici un contrôleur de type proportionnel-intégral, on pourra utiliser d'autres types de contrôle, par exemple proportionnel-intégral-dérivateur, ou autre.

Bien que l'on ait filtré indépendamment l'image du couple moyen *C_{moy}* et la mesure de couple *Cₘₑₛ* par deux filtres passe-bas indépendants, on pourra également supprimer ces deux filtres pour les remplacer par un unique filtre passe-bas disposé en aval du comparateur pour filtrer l'erreur ε.

Bien que l'on ait indiqué que l'on utilisait un étage de saturation 8 pour saturer la correction *x_{corr},* on pourra, en complément comme illustré ici, ou en remplacement de cet étage de saturation, utiliser un étage saturateur 21 pour saturer la consigne corrigée *X̅_{corr}* afin de garantir que la consigne corrigée reste dans des niveaux compatibles avec l'intégrité mécanique des composants du freins.

Enfin, bien que l'ont ait indiqué que, pour déterminer la correction *x_{corr}* de la consigne de position, l'on utilise la consigne de freinage *F̅* qui contient la correction d'antiblocage et dont on extrait les composantes de basse fréquence par un filtre passe-bas, on pourra déterminer cette correction de position autrement, par exemple en utilisant la consigne de freinage basse fréquence prise avant sa correction haute-fréquence par le dispositif de protection antiblocage (la consigne de freinage basse fréquence peut par exemple provenir des pédales du pilote provenir consigne de décélération lors d'un freinage en mode automatique dit « autobrake »). La consigne nominale *X̅* sera elle déterminée en partant d'une entrée qui est la somme de la consigne de freinage basse fréquence à laquelle on ajoute la correction d'antiblocage à haute fréquence.

## Revendications

1. Procédé de commande d'un frein de véhicule adapté à exercer un effort de freinage en réponse à une consigne d'actionnement, dans lequel :
- à partir d'une consigne de freinage (*F̅*), on détermine une consigne nominale d'actionnement (*X̅*) de l'actionneur du frein tenant compte de toutes les composantes de la consigne de freinage ;
- à partir de cette même consigne de freinage (*F̅*), et d'une mesure du couple (*Cₘₑₛ*) développé par le frein, on détermine une correction (*x_{corr}*) de la consigne nominale d'actionnement, **caractérisé en ce que** la correction ne tient compte que des évolutions de basse fréquence de la consigne de freinage;
- on ajoute la correction à la consigne nominale.

2. Procédé selon la revendication 1, dans lequel, pour déterminer la correction, on construit une image du couple moyen (*C_{moy}*) appliqué par le frein à partir de la consigne de freinage (*F̅*), et on compare ce couple moyen à la mesure du couple (*Cₘₑₛ*).

3. Procédé selon la revendication 2, dans lequel, avant la comparaison, l'image du couple moyen (*C_{moy}*) et la mesure du couple (*Cₘₑₛ*) sont filtrées pour en éliminer les composantes haute fréquence.

4. Procédé selon la revendication 3, dans lequel la comparaison fournit une erreur (ε) qui est soumise à un traitement (6,7), puis à une saturation (8) pour restreindre la correction à des valeurs comprises dans un intervalle prédéterminé ([*x*ₘᵢₙ,*x*ₘₐₓ]).

5. Procédé selon l'une des revendications précédentes, dans lequel on neutralise la correction (10,11) si le véhicule est à l'arrêt ou si on détecte une défaillance de moyens de mesure du couple.

6. Procédé selon la revendication 5, dans lequel la neutralisation de la correction comprend l'étape de figer la valeur de la correction à une valeur donnée.

7. Procédé selon la revendication 1, dans lequel la consigne de freinage (*F̅*) comporte des composantes haute-fréquence générées par une mise en oeuvre d'une protection anti-blocage, ces composantes hautes-fréquence étant filtrées pour déterminer la correction (*x_{corr}*) de la consigne nominale d'actionnement (*X̅*).

8. Procédé selon la revendication 1, dans lequel on sature (21) la consigne d'actionnement corrigée.

9. Dispositif pour la mise en oeuvre du procédé de l'une des revendications précédentes, comportant:
- une entrée pour recevoir une consigne de freinage (*F̅*);
- une entrée pour recevoir une mesure du couple (*Cₘₑₛ*) généré par le frein;
- des moyens de calcul, à partir de la consigne de freinage (*F̅*), d'une consigne nominale d'actionnement (*X̅*) de l'actionneur du frein ;
- des moyens de calcul, à partir de la consigne de freinage (*F̅*) et de la mesure du couple (*Cₘₑₛ*), d'une correction (*x_{corr}*) de la consigne nominale d'actionnement **caractérisé en ce que** ladite correction ne tient compte que des évolutions de basse fréquence de la consigne de freinage;
- une sortie fournissant une somme de la consigne d'actionnement et de la correction de la consigne d'actionnement.

## Claims

1. A method of controlling a vehicle brake that is adapted to exert a braking force in response to an actuation setpoint, the method comprising the following steps:
· from a braking setpoint (F̅), determining a nominal actuation setpoint (X̅) for the brake actuator, taking account of all of the components of the braking setpoint;
· from the same braking setpoint (F̅), and from a measurement (Cₘₑₛ) of the torque developed by the brake, determining a correction (x_{corr}) for the nominal actuation setpoint, being **characterized in that** said correction takes account only of low-frequency variations in the braking setpoint; and
· adding the correction to the nominal setpoint.

2. A method according to claim 1, in which, in order to determine the correction, an image of the mean torque (Cₘₑₐₙ) applied by the brake is constructed from the braking setpoint (F̅), and the means torque is compared with the measured torque (Cₘₑₛ).

3. A method according to claim 2, in which, prior to performing the comparison, the image of the mean torque (Cₘₑₐₙ) and the torque measurement (Cₘₑₛ) are both filtered in order to eliminate high-frequency components.

4. A method according to claim 3, in which the comparison delivers an error (ε) that is subjected to treatment (6, 7), followed by saturation (8) in order to restrict the correction to values lying within a predetermined range ([xₘᵢₙ, xₘₐₓ]).

5. A method according to any preceding claim, in which the correction (10, 11) is neutralized if the vehicle is stationary or if a failure of the torque measurement means is detected.

6. A method according to claim 5, in which the neutralization of the correction includes the step of freezing the correction value to a given value.

7. A method according to claim 1, in which the braking setpoint (F̅) includes high frequency components generated by implementing anti-locking protection, these high frequency components being filtered out in order to determine the correction (x_{corr}) for the nominal actuation setpoint (X̅).

8. A method according to claim 1, in which the corrected actuation setpoint is saturated (21).

9. Apparatus for implementing the method of any preceding claim, the apparatus comprising:
· an input for receiving a braking setpoint (F̅);
· an input for receiving a measurement (Cₘₑₛ) of the torque generated by the brake;
· calculation means for calculating a nominal actuation setpoint (F̅) for the brake actuator on the basis of the braking setpoint (X̅);
· calculation means for calculating a correction (x_{corr}) for the nominal actuation setpoint on the basis of the braking setpoint (F̅) and of the torque measurement (Cₘₑₛ), being **characterized in that** said correction takes account only of variations at low frequency in the braking setpoint; and
· an output delivering the sum of the actuation setpoint plus the actuation setpoint correction.

## Patentansprüche

1. Verfahren zur Steuerung einer Fahrzeugbremse, die dazu geeignet ist, in Antwort auf einen Betätigungssollwert eine Bremskraft auszuüben, wobei:
- ausgehend von einem Bremssollwert (*F̅*) ein nominaler Betätigungssollwert (*X̅*) für den Aktuator der Bremse bestimmt wird, der alle Anteile des Bremssollwertes berücksichtigt,
- ausgehend von genau diesem Bremssollwert (*F̅*) und einer Messung des von der Bremse entwickelten Drehmoments (*Cₘₑₛ*) eine Korrektur (*x_{corr}*) des nominalen Betätigungssollwertes bestimmt wird, **dadurch gekennzeichnet, dass** die Korrektur nur die niederfrequenten Entwicklungen des Bremssollwertes berücksichtigt,
- die Korrektur zu dem nominalen Sollwert addiert wird.

2. Verfahren nach Anspruch 1, wobei zum Bestimmen der Korrektur ein Bild des mittleren Drehmoments (*C_{moy}*) erstellt wird, das von der Bremse ausgehend von dem Bremssollwert (*F̅*) ausgeübt wird, und dieses mittlere Drehmoment mit der Messung des Drehmoments (*Cₘₑₛ*) verglichen wird.

3. Verfahren nach Anspruch 2, wobei vor dem Vergleich das Bild des mittleren Drehmoments (*C_{moy}*) und die Messung des Drehmoments (*Cₘₑₛ*) gefiltert werden, um daraus die hochfrequenten Anteile zu entfernen.

4. Verfahren nach Anspruch 3, wobei der Vergleich einen Fehler (ε) liefert, der einer Verarbeitung (6, 7) und anschließend einer Sättigung (8) unterzogen wird, um die Korrektur auf Werte innerhalb eines vorgegebenen Intervalls ([xₘᵢₙ, xₘₐₓ]) zu beschränken.

5. Verfahren nach einem der vorhergehenden Ansprüche, wobei die Korrektur (10, 11) aufgehoben wird, wenn das Fahrzeug still steht oder wenn ein Versagen der Mittel zum Messen des Drehmoments festgestellt wird.

6. Verfahren nach Anspruch 5, wobei das Aufheben der Korrektur den Schritt des Festhaltens des Wertes der Korrektur auf einen gegebenen Wert umfasst.

7. Verfahren nach Anspruch 1, wobei der Bremssollwert (*F̅*) hochfrequente Anteile umfasst, die durch einen Einsatz eines Anti-Blockier-Schutzes erzeugt werden, wobei diese hochfrequenten Anteile gefiltert werden, um die Korrektur (*x_{corr}*) des nominalen Betätigungssollwertes (*X̅*) zu bestimmen.

8. Verfahren nach Anspruch 1, wobei der korrigierte Betätigungssollwert gesättigt (21) wird.

9. Vorrichtung zum Durchführen des Verfahrens nach einem der vorhergehenden Ansprüche, umfassend:
- einen Eingang zum Empfangen eines Bremssollwertes (*F̅*),
- einen Eingang zum Empfangen einer Messung des von der Bremse erzeugten Drehmomentes (*Cₘₑₛ*),
- Rechenmittel zum Berechnen eines nominalen Betätigungssollwertes (*X̅*) für den Aktuator der Bremse ausgehend von dem Bremssollwert (*F̅*),
- Rechenmittel zum Berechnen einer Korrektur (*x_{corr}*) des nominalen Betätigungssollwertes ausgehend von dem Bremssollwert (*F̅*) und der Messung des Drehmoments (*Cₘₑₛ*), **dadurch gekennzeichnet, dass** die genannte Korrektur nur die niederfrequenten Entwicklungen des Bremssollwertes berücksichtigt,
- einen Ausgang, der eine Summe aus dem Betätigungssollwert und der Korrektur des Betätigungssollwertes liefert.
